# EUROPÄISCHE PATENTSCHRIFT

(11) **EP 0 612 548 B1**
(45) Veröffentlichungstag und Bekanntmachung des Hinweises auf die Patenterteilung: **17.04.1996**
(21) Anmeldenummer: 94101946.5
(22) Anmeldetag: 09.02.1994
(51) Int. Cl.: B01D 17/05

(54) **Verfahren zum Auftrennen von Öl-in-Wasser-Emulsionen**
Process for separating oil-in-water emulsions
Procédé pour la séparation d'émulsions du type huile-dans eau

(30) Priorität: 22.02.1993 DE 4305392
(43) Veröffentlichungstag der Anmeldung: 31.08.1994
(73) Patentinhaber: ADAM OPEL AG, D-65423 Rüsselsheim (DE)
(72) Erfinder: Preis, Thomas, Dipl.-Ing., D-67734 Katzweiler (DE); Balder, Klaus, D-67744 Medard (DE); Kercher, Fritz, D-66887 Neunkirchen (DE)
(74) Vertreter: Kümpfel, Heinz, Dipl.-Ing.

(56) Entgegenhaltungen:
- DE-A- 4 009 760
- DE-A- 4 040 022
- US-A- 4 462 913

## Beschreibung

Die vorliegende Erfindung betrifft ein Verfahren zum Auftrennen von Öl-in-Wasser-Emulsionen durch Primärspaltung der Emulsionen mit einem organischen kationischen Demulgator, Trennung des entstehenden Zweiphasensystems in eine Ölphase und eine Wasserphase und Sekundärspaltung der Ölphase mit einem Demulgator. Insbesondere betrifft die Erfindung ein Verfahren zum Auftrennen von Öl-in-Wasser-Emulsionen, die in der Metallindustrie anfallen.

In der Metallindustrie werden große Mengen an Emulsionen für Reinigungszwecke und für die Bearbeitung von Metallen als Kühlschmiermittel oder Kühlschmierstoffe eingesetzt. Für die Vielzahl der Fertigungsprozesse sind jeweils spezielle Kühlschmiermittel und Reiniger entwickelt worden, so daß viele unterschiedlich zusammengesetzte Emulsionen anfallen. Die Emulsionen enthalten in der Regel 3 bis 15% Öl, wobei das Öl in der Wasserphase dispergiert ist.

Diese Emulsionen verbrauchen sich mit der Zeit. Durch Schmutzeintrag, z.B. durch mechanischen Abrieb und abgewaschene Öle und Fette, und durch Zersetzung infolge Bakterienwachstums werden die Emulsionen in ihrer Wirkung verschlechtert und müssen ersetzt werden. Die verbrauchten Emulsionen sind wassergefährdende Stoffe, da sie Kohlenwasserstoffe, Emulgatoren sowie verschiedene bei ihrer Verwendung eingetragene Fremdstoffe, wie z.B. Metallabrieb, Korrosionsinhibitaren, Antischaumstoffe, in Lösung gegangene Schwermetalle enthalten. Daher müssen diese Altemulsionen aufgearbeitet werden.

Da es sich bei diesen Öl-in-Wasser-Emulsionen um stabile Emulsionen handelt, müssen sie durch wirkungsvolle Verfahren gespalten werden. Zu den bisher bekannten Verfahren gehören die thermische Spaltung, die chemische Spaltung, die physikalische Spaltung und die biologische Spaltung. Eine Übersicht dieser Verfahren mit ihren Vor- und Nachteilen ist dem Referat von K.H. Paula "Verfahren zur Emulsionsspaltung mit Schwerpunkt umweltfreundliche Verfahren" bei Münchner Werkstofftechnik-Seminare "Kühlschmierstoffe und Reinigungsmittel in der metallverarbeitenden Industrie - Teil II", 17. und 18. März 1992, Referate, Seiten 135 bis 182 MWS, Dr. Schreiner VDI, Hans-Mielich-Straße 1, 8000 München 90 zu entnehmen. Eine Rückgewinnung von verwertbaren Ölen aus den Emulsionen wird in dieser Druckschrift nicht genannt. Vielmehr wird die Ölphase entsorgt, oder die Öle werden verbrannt oder abgebaut.

Die bei der Primärspaltung erhaltene Ölphase enthält noch viel Wasser und ist ebenfalls eine Emulsion. In der Regel hat sie einen Ölanteil von 30 bis 50%, einen Wasseranteil von 40 bis 65% sowie einen Feststoffanteil von 5 bis 10%. Die Überführung dieser Emulsionen zu Raffinerien zur Aufarbeitung ist energie- und kostenaufwendig.

Aus der DE-A-2 846 926 ist ein Verfahren bekannt zur Entfernung von in Wasser unlöslichen organischen Verbindungen, wie Fette, Öle und Wachse, von einer Oberfläche und zur Rückgewinnung der Verbindungen. Bei diesem Verfahren werden spezielle Etherphosphate zur Bildung einer Öl-in-Wasser-Emulsion verwendet, die anschließend durch Einstellung eines pH-Wertes von 7 bis 10 mit Hilfe von anorganischen Basen in eine organische und eine wäßrige Phase gespalten wird. Diese Spaltung ist nur für Emulsionen geeignet, bei denen die speziellen Etherphosphate verwendet werden. Ferner ist keine weitere Aufarbeitung der Ölphase nach der Spaltung und Trennung der Phasen vorgesehen.

Die EP-A-0 186 029 beschreibt ein Verfahren zum Trennen von Öl-in-Wasser-Emulsionen, die als abgetrennte wäßrige Phase aus den bei der Erdölförderung anfallenden Wasser-in-Öl-Emulsionen erhalten werden. Zur Spaltung dieser Öl-in-Wasser-Emulsionen werden Homopolymere des Diallyldimethylammoniumchlorids verwendet. Eine weitere Aufarbeitung der bei dieser Spaltung erhaltenen Ölphase ist nicht vorgesehen. Ferner ist das Verfahren auf Emulsionen beschränkt, die bei der Erdölförderung und weiteren Aufarbeitungen des Rohöls auftreten.

In der EP-A-0 290 030 wird ein Verfahren zum Trennen von Öl-in-Wasser-Emulsionen beschrieben, die in industriellen Verfahren anfallen. Bei diesem Verfahren wird zunächst die auf der Emulsion schwimmende Ölschicht durch Abskimmen entfernt, und dann wird die Emulsion in aufeinander folgenden Stufen mit einem kationischen organischen Polymer und einem anionischen organischen Polymer behandelt. Eine weitere Aufarbeitung der nach der Abtrennung der Wasserphase erhaltenen Ölphase ist nicht vorgesehen.

Die WO 83/01207 beschreibt ein Verfahren und eine Vorrichtung zum Trennen von Öl-in-Wasser-Emulsionen. Bei diesem Verfahren wird der Emulsion als Spalter ein in Wasser gelöster Polyelektrolyt mit hohem Molekulargewicht, der Fäden bilden kann, zugesetzt. Die Ölphase wird in Form von Fäden, die sich um die Achse einer Helix wickeln, von der Wasserphase getrennt. Eine weitere Aufarbeitung der Ölphase ist nicht vorgesehen.

Aus der DE-A-4 009 760 ist ein Verfahren zum Auftrennen von Öl-in-Wasser-Emulsionen bekannt, bei dem die Emulsionen zweistufig gespalten werden. Zunächst wird die Emulsion mit einem organischen kationischen Elmulsionsspalter, dann mit einem anorganischen Emulsionsspalter versetzt. Von dem entstehenden Zweiphasensystem wird die Ölphase abgetrennt, und die wäßrige Phase wird zunächst mit einem anorganischen Emulsionsspalter und dann mit einem organischen anionischen Emulsionsspalter behandelt. Als anorganische Emulsionsspalter werden in der ersten Stufe Salze dreiwertiger Metalle und in der zweiten Stufe Salze zweiwertiger Metalle verwendet, die jeweils kationisch wirken. Die Ölphase kann einer Sekundärspaltung zugeführt werden oder verbrannt werden. Angaben über die Sekundärspaltung der Ölphase werden nicht gemacht.

Ein Verfahren der eingangs genannten Art ist aus der DE-A-4 040 022 bekannt. Zur Sekundärspaltung der Ölphase werden bei diesem Verfahren anionische organische Demulgatoren verwendet. Bei diesem Verfahren enthält die Ölphase nach der Sekundärspaltung immer noch einen relativ hohen Wasseranteil. Außerdem ist keine wirksame Entfernung der Feststoffe möglich.

Aufgabe der vorliegenden Erfindung ist die Schaffung eines Verfahrens der eingangs genannten Art, mit dem eine gute Trennung der Emulsionen in Öl, Wasser und Feststoffe möglich ist und das Öl wirtschaftlich und umweltschonend einer Wiederverwertung zugeführt werden kann.

Die Aufgabe wird ausgehend von dem eingangs genannten Verfahren dadurch gelöst, daß die Sekundärspaltung mit einem anionischen, wasserlöslichen, alkalischen Demulgator durchgeführt wird, und die mit diesem Demulgator behandelte Ölphase in einem Dreiphasendekanter in Öl, Wasser und Feststoff getrennt wird.

Das erfindungsgemäße Verfahren ist insbesondere für die Aufarbeitung für in der Metallindustrie anfallende Öl-in-Wasser-Emulsionen geeignet. Es ermöglicht eine Eliminierung der Schwermetalle sowie eine wesentlich stärkere Erniedrigung des Wassergehaltes der aus der Primärspaltung erhaltenen Ölphase als es nach bisher bekannten Verfahren möglich war. Dadurch ist eine wirtschaftliche, energiesparende und umweltschonende Wiederverwertung des Öls aus verbrauchten Altemulsionen möglich. Das Verfahren eignet sich für die Aufarbeitung kleiner und großer Mengen von Öl-in-Wasser-Emulsionen und ist von der Ölkonzentration der Emulsionen unabhängig.

Das Verfahren kann kontinuierlich und chargenweise durchgeführt werden. Sofern die Emulsionen eine etwa gleichbleibende Zusammensetzung haben, bietet sich eine kontinuierliche Arbeitsweise an. Für in der Zusammensetzung schwankende Emulsionen ist eine Chargenbehandlung vorzuziehen, da die Demulgatoren in der jeweils benötigten Menge zugesetzt werden können, die unterschiedlichen Reaktionszeiten berücksichtigt werden können sowie eine sichere Betriebsführung möglich ist, da jeder Schritt nach vorangegangener Prüfung eingeleitet wird. Ferner ist der Investitionsbedarf gering.

Vorzugsweise wird beim erfindungsgemäßen Verfahren die Sekundärspaltung mit einer thermischen Behandlung der aus der Primärspaltung erhaltenen Ölphase verbunden. Die Ölphase wird vorzugsweise auf 60 bis 90°C erwärmt. Diese Erwärmung kann vor, nach oder während der Zugabe des Demulgators erfolgen.

Wie bereits eingangs ausgeführt wurde, handelt es sich bei der nach der Primärspaltung abgetrennten Ölphase ebenfalls um eine Emulsion. Der anionische, wasserlösliche alkalische Demulgator für die Sekundärspaltung wirkt nur auf der Wasserseite und nicht wie die bisher für die Sekundärspaltung eingesetzten organischen Emulsionsspalter auf der Ölseite dieser Emulsion. Dadurch wird bei der anschließenden Trennung unter Einwirkung der Zentrifugalkraft eine optimale Auftrennung von Öl, Wasser und Feststoff erziehlt.

Als anionische, wasserlösliche, alkalische Demulgatoren kommen vor allem anorganische Verbindungen infrage und bevorzugt Salze, die in Wasser alkalisch reagieren. Beispielsweise können Alkalisilikate und -phosphate verwendet werden. Es können auch Slikate und Phosphate anderer Metalle eingesetzt werden, sowie Basen, wie z.B. Natriumhydroxid oder Kaliumhydroxid, oder ein in Wasser alkalisch reagierendes Salz, wie z.B. Natriumcarbonat. Bevorzugt wird eine Mischung aus Silikaten, Phosphaten und Natriumhydroxid als anionischer, wasserlöslicher, alkalischer Demulgator verwendet.

Durch die erfindungsgemäße Verwendung eines anionischen wasserlöslichen, alkalischen Demulgators wird in dem Dreiphasendekanter eine optimale Trennung erreicht. Das Arbeitsprinzip des Dreiphasendekanters beruht auf dem Prinzip der Zentrifugalkrafttrennung von Medien mit unterschiedlicher Dichte. Beim erfindungsgemäßen Verfahren werden zwei unterschiedlich schwere Flüssigkeiten voneinander getrennt und gleichzeitig der Feststoff separat ausgetragen. Bevorzugt werden die beiden flüssigen Phasen unter Einwirkung einer Zentrifugalkraft von 1000 bis 2000 g im Dekanter getrennt und einzeln abgezogen. Man erhält Öl mit einem Wassergehalt von <10 Gew.-%. Dieses Öl kann direkt in einer Raffinerie weiter aufgearbeitet und einer Wiederverwertung zugeführt werden. Das aus dem Dekanter abgezogene Wasser kann mit der nach der Primärspaltung abgetrennten Wasserphase vereinigt und einer Nachbehandlung zur Entfernung von noch enthaltenen Kohlenwasserstoffen zugeführt werden. Der Feststoffaustrag des Dekanters ist ein ölhaltiger Schlamm, der unter anderem Metallabrieb und Schleifpartikeln enthält.

Das erfindungsgemäße Verfahren bietet gegenüber den bisherigen Verfahren mit Sekundärspaltung den Vorteil, daß das den Dekanter verlassende Öl nicht nur einen wesentlich geringeren Wassergehalt hat, sondern auch frei von Feststoffen, wie Schwermetallen und Schleifpartikeln ist.

Die verbrauchten Emulsionen weisen einen hohen Anteil an Schmier-, Gleitbahn- und Hydraulikölen auf, die von Natur eine kationische Bindefähigkeit haben. Sie sollen im Betrieb wegen der besseren Separierfähigkeit von der anionisch stabilisierten Bearbeitungsemulsion abgestoßen werden. Bei der Aufarbeitung der verbrauchten Emulsionen binden sie bei der Spaltung die kationischen Demulgatoren. Um dies zu vermeiden, werden vorzugsweise vor der Primärspaltung die auf den verbrauchten Emulsionen auf schwimmenden Leck- und Hydraulikölen sowie Fette und übersättigten Emulsionskonzentrate durch Abskimmen entfernt, d.h. man läßt die Ölschicht aufrahmen und abfließen, ggf. mit Hilfe von Schabern. Durch diese Vorabscheidung der Ölschicht kann der Verbrauch an organischen Demulgatoren erheblich reduziert werden, in der Praxis um 5 bis 15%.

Bei den aus der Metallindustrie stammenden verbrauchten Emulsionen handelt es sich in der Regel um alkalische Emulsionen. Daher werden diese verbrauchten Emulsionen nach dem Abskimmen der aufschwimmenden Ölschicht auf einen leicht sauren pH-Wert eingestellt, bevorzugt auf 5 bis 6. Dazu können anorganische oder organische Säuren verwendet werden, wie z.B. Schwefelsäure, Kohlensäure, Zitronensäure Amidosulfonsäure.

Die Wirkungsweise der organischen kationischen Demulgatoren bei der Primärspaltung beruht auf der Aufhebung der anionischen Oberflächenladungen der Emulgatoren und Tenside, d.h. die Ladungen der Netzmittel werden neutralisiert. Die Emulsion bricht in eine Wasserphase und eine frei flotierende Ölphase. Als organische kationische Demulgatoren können die bei der Primärspaltung üblicherweise verwendeten Stoffe eingesetzt werden. Bevorzugt werden erfindungsgemäß Demulgatoren auf Basis von Polyaminen und Polyamidaminen verwendet.

Die organischen kationischen Demulgatoren müssen möglichst proportional zur Menge der jeweiligen anionischen Emulsionsbestandteile der verbrauchten Emulsionen zudosiert werden, um ein möglichst neutrales Grenzflächenpotential zwischen Öl- und Wasserphase zu erreichen. Wie bereits weiter oben ausgeführt wurde, ist bei verbrauchten Emulsionen mit schwankenden Zusammensetzungen der Chargenbetrieb vorzuziehen. Dadurch kann die jeweils benötigte Menge an organischen kationischen Demulgatoren zugegeben werden.

Die bei der Primärspaltung gebildete Ölphase und die Wasserphase werden voneinander getrennt. Die Ölphase wird dann vorzugsweise zusammen mit der durch Abskimmen entfernten Ölschicht der Sekundärspaltung zugeführt.

Die Wasserphase wird vorzugsweise einer Nachbehandlung zugeführt, um noch vorhandene Kohlenwasserstoffe sowie Schwermetalle zu entfernen. Eine mögliche Nachbehandlung besteht in der Zugabe von Calciumhydroxid oder Natriumhydroxid, um eine Flockulation zu erreichen. Durch Sedimentation und Flotation werden die ausgefällten Schwermetalle sowie die Kohlenwasserstoffe entfernt. Insbesondere durch die Calciumhydroxidzugabe wird eine sehr gute Schwermetallfällung erzielt. Die Konzentration an Kohlenwasserstoffen nach dieser Nachbehandlung liegen weit unter 10 ppm.

Eine andere Möglichkeit der Nachbehandlung der Wasserphase besteht in der Ultrafiltration, bei der die Wasserphase über eine semipermeable Membran gedrückt wird, die die restlichen Ölteile zurückhält. In einer bevorzugten Ausführungsform wird die Wasserphase durch biologische Spaltung nachbehandelt.

Bei allen beschriebenen Nachbehandlungen kann außer der nach der Primärspaltung und Abtrennung erhaltenen Wasserphase auch das nach der Sekundärspaltung der Ölphase und Trennung im Dekanter erhaltene Wasser zugeführt werden.

Die Erfindung wird im folgenden an Hand des Fließschemas näher erläutert.

Über die Zuführleitung 1 wird die verbrauchte Emulsion in den Speicherbehälter 2 mit einem Fassungsvermögen von 1500 m³ geleitet. Aus dem Speicherbehälter 2 entfernt man die aufschwimmende Ölschicht 3 über die Leitung 4, die in das Reaktionsgefäß 5 mündet, in dem die Sekundärspaltung durchgeführt wird. Etwa 0,6 bis 1 Gew.-% der verbrauchten Emulsion werden als Ölschicht 3 über die Leitung 4 in das Reaktionsgefäß 5 geleitet. Am Boden des Speicherbehälters 2 ist ein Auslaß, von dem die Emulsion mit Hilfe einer Pumpe 6 in mehrere im Chargenbetrieb arbeitende Reaktionsgefäße 7 gefördert wird, von denen nur zwei gezeigt sind. Sie haben jeweils ein Fassungsvermögen von 250 m³. In ihnen findet die Primärspaltung der Emulsion statt.

Über die Leitung 8 wird den Emulsionen in den Reaktionsgefäßen 7 der organische kationische Demulgator zugeführt. Um die richtige Menge zudosieren zu können, wird das Ladungspotential der Emulsionen bestimmt und der organische kationische Demulgator bis zum Erreichen des isoelektrischen Punktes zugeführt. In die Reaktionsgefäße 7 wird jeweils über die Leitungen 9 Luft geleitet, um die Ölphasen 10 als auf den Wasserphasen 11 aufrahmendes Flotat zu erhalten. Nach einer Reaktionszeit von 2 bis 3 Stunden ist die Aufspaltung in Ölphasen 10 und Wasserphasen 11 abgeschlossen. Am Boden der Reaktionsgefäße 7 ist jeweils eine Auslaßleitung, durch die zuerst die Wasserphasen 11 mittels der Pumpen 12 durch die Leitung 13 zu einer Nachbehandlungsstufe 14 gefördert werden.

Um die Wasserphasen 11 sauber von den Ölphasen 10 trennen zu können, wird die Trennlinie zwischen den Phasen 10 und 11 mit Ultraschallsonden (nicht dargestellt) festgestellt.

Das Signal der Ultraschallsonden bewirkt über eine elektrische Schaltung die Umschaltung der Ventile 15. Die Ölphasen 10 werden dann mittels der Pumpen 12 über die Leitung 16 in das mit einem Rührer 17 und einer Heizeinrichtung 18 versehene Reaktionsgefäß 5 gefördert. Etwa 1 bis 2 Gew.-% der Emulsion werden als Ölphase dem Reaktionsgefäß 5 zugeführt, in dem die Sekundärspaltung stattfindet.

Diese Ölphase enthält etwa 30-40 Gew.-% Öl, 50-60 Gew.-% Wasser und 5-10 Gew.-% Feststoffe. Sie wird in dem Gefäß 5 auf 80°C aufgeheizt. Über die Leitung 19 wird der anionische, wasserlösliche, alkalische Demulgator in Form einer 4 %igen wäßrigen Lösung zugeführt. Vor seiner Auflösung ist er ein Pulver mit folgender Spezifikation:

| | |
|---|---|
| Schüttdichte | 1,0 bis 1,1 kg/l |
| Trockenverlust (2h, 105°C) | 8,0 bis 10,0 Gew.-% |
| Alkalität (ber. als NaOH) | |
| Phenolphthalein | 45,4 bis 50,2 Gew.-% |
| Methylorange | 55,0 bis 59,2 Gew.-% |
| Natriummetasilikat Pentahydrat | 45 bis 50 Gew.-% |
| Alkalipyrophosphat | etwa 10 Gew.-% |
| Natriumhydroxid | 19,0 bis 20,5 Gew.-% |
| Natriumcarbonat | 19,0 bis 21,5 Gew.-% |

Die Zudosierung der 4 Gew.-%igen Lösung des Demulgators erfolgt in einer Menge, daß das in den Auffangbehälter 20 fließende Öl klar ist. Für 1 m³ Ölphase werden etwa 100 l der 4 Gew.%igen Lösung zudosiert. Die Lösung kann auch statt in das Reaktionsgefäß 4 in die Leitung 21 zwischen dem Reaktionsgefäß 5 und dem Dreiphasendekanter 22 zugeführt werden, da die Spaltung der Ölphase spontan erfolgt. Im Dreiphasendekanter 22 wird die Mischung in Öl, Wasser und Schlamm getrennt. Das in den Auffangbehälter 20 fließende Öl hat einen Wassergehalt von weniger als 10 Gew.-%. Der in den Auffangbehälter 23 fließende Schlamm enthält die Feststoffe und etwa 40 Gew.-% Öl. Das über die Leitung 24 aus dem Dekanter 22 fließende Wasser wird einem Pumpwerksumpf 25 zugeführt, von dem es über die Leitung 26 in den Speicherbehälter 2 zurückgepumpt wird und der Primärspaltung erneut zugeführt wird.

Die durch die Leitung 13 in die Nachbehandlungsstufe 14 geförderte Wasserphase wird dort zum Beispiel einer biologischen Spaltung unterzogen. Danach fließt das nachbehandelte Wasser in eine Kontrollstation 27, wo es einer abschließenden Prüfung, z.B. des pH-Wertes, unterzogen wird. Bei ausreichender Reinheit mit einem Ölanteil von <10 mg/l wird es dem Abwassersystem über die Leitung 28 zugeführt. Wenn das Wasser nicht die gewünschte Reinheit hat, wird das Ventil 29 geschlossen und das Wasser über die Leitung 30 dem Pumpwerksumpf 25 zur Rückführung in den Speicherbehälter 2 zugeführt. Durch die Leitung 31 können für die Nachbehandlungsstufe 14 notwendige Stoffe zugeführt werden.

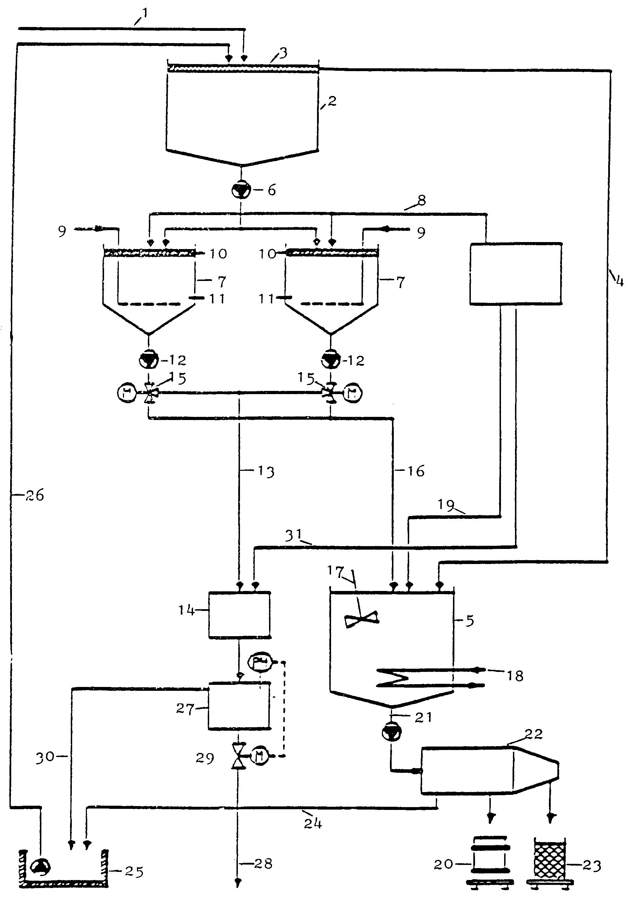

## Patentansprüche

1. Verfahren zum Auftrennen von Öl-in-Wasser-Emulsionen durch Primärspaltung der Emulsionen mit einem organischen kationischen Demulgator, Trennung des entstehenden Zweiphasensystems in eine Ölphase und eine Wasserphase und Sekundärspaltung der Ölphase mit einem Demulgator, dadurch gekennzeichnet, daß die Sekundärspaltung mit einem anionischen, wasserlöslichen, alkalischen Demulgator durchgeführt wird, und die mit diesem Demulgator behandelte Ölphase in einem Dreiphasendekanter in Öl, Wasser und Feststoff getrennt wird.

2. Verfahren nach Anspruch 1, dadurch gekennzeichnet, daß die bei der Primärspaltung erhaltene und abgetrennte Ölphase erwärmt wird.

3. Verfahren nach Anspruch 2, dadurch gekennzeichnet, daß vor, nach oder während der Zugabe des anionischen, wasserlöslichen alkalischen Demulgators erwärmt wird.

4. Verfahren nach Anspruch 2 oder 3, dadurch gekennzeichnet, daß auf Temperaturen von 60 bis 90°C erwärmt wird.

5. Verfahren nach einem der Ansprüche 1 bis 4, dadurch gekennzeichnet, daß als anionischer, wasserlöslicher, alkalischer Demulgator ein anorganischer Demulgator verwendet wird.

6. Verfahren nach Anspruch 5, dadurch gekennzeichnet, daß der anorganische Demulgator Silikate und/oder Phosphate enthält.

7. Verfahren nach Anspruch 5 oder 6, dadurch gekennzeichnet, daß der anorganische Demulgator mindestens eine Base enthält.

8. Verfahren nach einem der Ansprüche 5 bis 7, dadurch gekennzeichnet, daß der anorganische Demulgator in Wasser alkalisch reagierende Salze enthält.

9. Verfahren nach einem der Ansprüche 1 bis 8, dadurch gekennzeichnet, daß vor der Primärspaltung die auf den Öl-in-Wasser-Emulsionen schwimmende Ölschicht durch Abskimmen entfernt wird.

10. Verfahren nach Anspruch 9, dadurch gekennzeichnet, daß die durch Abskimmen entfernte Ölschicht zusammen mit der nach der Primärspaltung abgetrennten Ölphase der Sekundärspaltung zugeführt wird.

11. Verfahren nach einem der Ansprüche 1 bis 10, dadurch gekennzeichnet, daß die Öl-in-Wasser-Emulsion vor der Zugabe des organischen, kationischen Demulgators mit einer Säure auf einen schwach sauren pH-Wert eingestellt wird.

12. Verfahren nach einem der Ansprüche 1 bis 11, dadurch gekennzeichnet, daß die nach der Primärspaltung abgetrennte Wasserphase nachbehandelt wird.

13. Verfahren nach Anspruch 12, dadurch gekennzeichnet, daß die Wasserphase biologisch nachbehandelt wird.

14. Verfahren nach Anspruch 12, dadurch gekennzeichnet, daß die Wasserphase mittels Ultrafiltration nachbehandelt wird.

15. Verfahren nach Anspruch 12, dadurch gekennzeichnet, daß die Wasserphase durch Zugabe einer anorganischen Base nachbehandelt wird.

## Claims

1. Method for separating oil-in-water emulsions by primary cracking of the emulsions with an organic cationic demulsifier, separation of the resulting two-phase system into an oil phase and a water phase and secondary cracking of the oil phase with a demulsifier, characterised in that the secondary cracking is carried out with an anionic water-soluble alkaline demulsifier, and the oil phase treated with this demulsifier is separated in a three-phase decanter into oil, water and solids.

2. Method according to claim 1, characterised in that the oil phase obtained during primary cracking and separated is heated.

3. Method according to claim 2, characterised in that before, after or during addition of the anionic water-soluble alkaline demulsifier, heating is carried out.

4. Method according to claim 2 or 3, characterised in that heating is carried out to temperatures from 60 to 90°C.

5. Method according to any of claims 1 to 4, characterised in that an inorganic demulsifier is used as the anionic water-soluble alkaline demulsifier.

6. Method according to claim 5, characterised in that the inorganic demulsifier contains silicates and/or phosphates.

7. Method according to claim 5 or 6, characterised in that the inorganic demulsifier contains at least one base.

8. Method according to any of claims 5 to 7, characterised in that the inorganic demulsifier contains salts which react alkaline in water.

9. Method according to any of claims 1 to 8, characterised in that before primary cracking, the oil layer floating on the oil-in-water emulsions is removed by skimming off.

10. Method according to claim 9, characterised in that the oil layer removed by skimming off is supplied for secondary cracking together with the oil phase separated after primary cracking.

11. Method according to any of claims 1 to 10, characterised in that the oil-in-water emulsion before addition of the organic, cationic demulsifier is adjusted with an acid to a weakly acid pH value.

12. Method according to any of claims 1 to 11, characterised in that the water phase separated after primary cracking is treated subsequently.

13. Method according to claim 12, characterised in that the water phase is biologically treated subsequently.

14. Method according to claim 12, characterised in that the water phase is treated subsequently by ultrafiltration.

15. Method according to claim 12, characterised in that the water phase is treated subsequently by addition of an inorganic base.

## Revendications

1. Procédé pour la séparation d'émulsions huile-dans-l'eau par rupture primaire des émulsions au moyen d'un agent démulsionnant organique cationique, séparation du système à deux phases ainsi obtenu en une phase huileuse et une phase aqueuse, puis rupture secondaire de la phase huileuse au moyen d'un agent démulsionnant, caractérisé en ce que la rupture secondaire est réalisée à l'aide d'un agent démulsionnant anionique alcalin hydrosoluble, et en ce que la phase huileuse traitée avec cet agent démulsionnant est divisée, dans un dispositif de décantation à trois phases, en une phase huileuse, une phase aqueuse et une phase solide.

2. Procédé conforme à la revendication 1, caractérisé en ce que la phase huileuse obtenue par rupture primaire et séparée est chauffée.

3. Procédé conforme à la revendication 2, caractérisé en ce que l'on chauffe avant, après ou pendant l'addition de l'agent démulsionnant anionique alcalin hydrosoluble.

4. Procédé conforme à la revendication 2 ou 3, caractérisé en ce que l'on chauffe à une température comprise entre 60 et 90 °C.

5. Procédé conforme à une des revendications 1 à 4, caractérisé en ce que l'on utilise comme agent démulsionnant anionique alcalin hydrosoluble un agent démulsionnant inorganique.

6. Procédé conforme à la revendication 5, caractérisé en ce que l'agent démulsionnant inorganique contient des silicates et/ou des phosphates.

7. Procédé conforme à la revendication 5 ou 6, caractérisé en ce que l'agent démulsionnant inorganique contient au moins une base.

8. Procédé conforme à une des revendications 5 à 7, caractérisé en ce que l'agent démulsionnant inorganique contient des sels qui présentent dans l'eau une réaction alcaline.

9. Procédé conforme à une des revendications 1 à 8, caractérisé en ce que l'on sépare par écumage, avant la rupture primaire, la phase huileuse sumageante de l'émulsion huile-dans-l'eau.

10. Procédé conforme à la revendication 9, caractérisé en ce que la phase huileuse séparée par écumage et la phase huileuse séparée après la rupture primaire sont soumises conjointement à la rupture secondaire.

11. Procédé conforme à une des revendications 1 à 10, caractérisé en ce que le pH de l'émulsion huile-dans-l'eau est ajusté, avant l'addition de l'agent démulsionnant organique cationique, à l'aide d'un acide à une valeur faiblement acide.

12. Procédé conforme à une des revendications 1 à 11, caractérisé en ce que la phase aqueuse séparée après la rupture primaire est soumise à un traitement ultérieur.

13. Procédé conforme à la revendication 12, caractérisé en ce que la phase aqueuse est soumise à un post-traitement biologique.

14. Procédé conforme à la revendication 12, caractérisé en ce que la phase aqueuse est traitée ultérieurement par ultrafiltration.

15. Procédé conforme à la revendication 12, caractérisé en ce que la phase aqueuse est traitée ultérieurement par addition d'une base minérale.
